Europäisches Patentamt

European Patent Office

Office européen des brevets

(11) Numéro de publication: **0 385 876**
**A1**

# DEMANDE DE BREVET EUROPEEN

(21) Numéro de dépôt: 90400584.0

(22) Date de dépôt: 02.03.90

(51) Int. Cl.5: **E04F 15/024, E04B 5/48, H02G 3/28, H02G 3/02**

(30) Priorité: **02.03.89 FR 8902717**

(43) Date de publication de la demande:
**05.09.90 Bulletin 90/36**

(84) Etats contractants désignés:
**AT BE CH DE DK ES FR GB GR IT LI LU NL SE**

(71) Demandeur: **FRANCAISE DE DEVELOPPEMENT DE PROCEDES DE BATIMENT, SOCIETE CIVILE**
**La Ferme, 70, rue Léon Bourgeois**
**F-91120 Palaiseau(FR)**

(72) Inventeur: **Gossner, Gabriel**
**La Ferme, 70 rue Léon Bourgeois**
**F-91120 Palaiseau(FR)**

(74) Mandataire: **Hasenrader, Hubert et al**
**Cabinet BEAU DE LOMENIE 55, rue d'Amsterdam**
**F-75008 Paris(FR)**

(54) **Plancher surélevé pour la desserte d'un local en câbles divers par le sol et dalle d'un plancher surélevé.**

(57) L'invention concerne un plancher surélevé (11) d'une épaisseur de 10 cm au plus, comportant des logements de forme tubulaire (12) parallèles à la surface du sol traversant une pluralité de chambres (14) surmontées d'une zone de moindre résistance (19) comportant un élément métallique détectable (18). Le plancher surélevé (11) est réalisé par une juxtaposition de moules élémentaires (35) recouverte de béton. Le moule élémentaire (35) comprend une plaque profilée (40) dans la paroi de laquelle est prévu un élément métallique détectable (18).

L'invention concerne également une dalle (55) préfabriquée comportant un voile (62), des parois de support (63) et des cloisons (64) délimitant des logements pour le passage de câbles.

Application : desserte en électricité, téléphone ou autres par le sol.

Fig.5

EP 0 385 876 A1

La présente invention concerne un plancher surélevé recouvrant un plancher structurel et servant à la desserte d'un local d'immeuble avec des câbles électriques, téléphoniques, optiques ou autres, issus du sol et reliés à des points de raccordement prévus au voisinage du plancher structurel du local dans les zones de circulation de l'immeuble ou dans les plinthes du local, ledit plancher surélevé comportant dans son épaisseur un espace creux dans lequel des câbles peuvent être installés.

La desserte des locaux des immeubles se fait soit par des fourreaux noyés dans l'épaisseur d'une chape rapportée dans les zones de circulation de l'immeuble, soit par des caniveaux disposés le long d'un mur des zones de circulation, soit par des plinthes disposées en général le long des murs de façade des locaux. Les câbles sont issus de répartiteurs ou sous-répartiteurs situés dans l'étage et passent par des points de raccordement disposés au voisinage du plancher des locaux à équiper. Des boîtiers de raccordement peuvent être disposés aux points de raccordement, mais ce n'est pas obligatoire.

Dans l'état actuel de la technique, l'équipement du local jusqu'aux prises de courant électrique, de téléphone, ou autres se fait en général en faisant transiter les câbles entre les points de raccordement et les prises, soit de façon apparente le long des murs du local, soit en faisant passer les câbles par des chemins préétablis incorporés dans les murs ou dans les plinthes.

On sait également relier des points précis du plancher du local à des points de raccordement en noyant des fourreaux dans une chape rapportée, chaque fourreau reliant un point de raccordement à un point prédéterminé et précis du local.

Il est également connu d'équiper le local par un faux plancher comportant des dalles rigides supportées à leurs angles par des vérins réglables en hauteur fixés au plancher structurel du local. Les câbles sont disposés sous les dalles, passent entre les vérins et relient les points de raccordement à n'importe quel point du local grâce à des ouvertures ménagées dans les dalles.

Ces deux solutions de l'état de la technique actuelle présentent des inconvénients.

La méthode consistant à noyer des fourreaux dans une chape rapportée permet d'alimenter des points déterminés (en électricité, téléphone, en données de bureautique ou autres), mais le câblage réalisé est difficilement modifiable et le nombre de points desservis est assez limité. Or, l'affectation des locaux et l'agencement de ceux-ci ont souvent besoin d'être changés au cours de l'exploitation du bâtiment. De plus, de nouvelles techniques, telles la bureautique, la micro-informatique, nécessitent l'installation de nouveaux câbles. Les fourreaux noyés dans la chape ne permettent pas de résoudre ces problèmes si ce n'est à des coûts prohibitifs.

La méthode consistant à installer un faux plancher remédie aux inconvénients ci-dessus, mais elle a également des inconvénients. Tout d'abord, l'épaisseur du faux plancher oblige souvent, soit à rehausser le bâtiment, soit à diminuer la hauteur libre dans les locaux, ce qui est parfois incompatible avec le programme du constructeur et les règles administratives. De plus, l'installation du faux plancher nécessite d'abord la pose des vérins et l'ajustement en hauteur de ces vérins, ce qui se traduit par des coûts de main-d'oeuvre importants. Enfin, les vérins étant en général fixés au plancher par collage, il arrive, avec le temps, que certains vérins ne soient plus fixés solidement au plancher et basculent lorsque l'on tire de nouveaux câbles, ce qui peut entraîner une instabilité des dalles du faux plancher et provoquer des accidents du personnel. Enfin, le confort acoustique fourni par ces faux planchers est de mauvaise qualité.

On sait également réaliser sur un plancher inférieur d'un local un plancher surélevé, comportant des galeries sur sa face inférieure, en recouvrant le plancher inférieur avec une feuille de coffrage en matière plastique comportant des alvéoles formant pied de support de la feuille de coffrage et en coulant du béton sur la feuille de coffrage de manière à la recouvrir entièrement. La demande de brevet européen 0 127 037 décrit un mode de réalisation d'une telle feuille de coffrage. Après la réalisation du plancher surélevé, celui-ci présente sur sa face inférieure deux réseaux de galeries parallèles en forme de voûte qui s'entrecoupent perpendiculairement, chaque galerie d'un réseau étant séparée des galeries voisines du même réseau par des pieds de support.

Le plancher surélevé ainsi réalisé présente les avantages du faux plancher et permet d'installer des câbles dans deux directions privilégiées orthogonales, voire même dans des directions obliques. Le volume de l'espace creux disponible pour le passage des câbles est nettement supérieur au volume des pieds de support. Il présente toutefois l'inconvénient de ne pas délimiter de façon précise les galeries de passage des câbles de manière à pouvoir les affecter en fonction du type de câbles comme l'exige la réglementation. Le volume de l'espace creux disponible permet, lors des modifications du câble, de laisser en place les câbles anciens qui ne sont plus utilisés, ce qui rend plus difficile les modifications ultérieures. De plus, la réglementation exigeant de séparer les câbles protégés des réseaux de câbles non protégés, ceci nécessite de placer dans les galeries des barrières de séparation, ce qui entraîne un coût supplémentaire.

Le but de la présente invention est de proposer un plancher surélevé du type mentionné qui pallie les inconvénients cités et qui permette en particulier de séparer les différents types de câbles.

Le but est atteint selon l'invention par le fait que l'espace creux est organisé en au moins un réseau de logements de forme tubulaire indépendants les uns des autres, chaque logement de forme tubulaire communiquant avec un point de raccordement et présentant une pluralité de zones élargies formant chambres réparties sur sa longueur.

Grâce à cette conception, les câbles placés dans un logement de forme tubulaire proviennent d'un seul point de raccordement. Les points de raccordement étant en général affectés à un seul type de câbles, un logement de forme tubulaire ne peut contenir qu'un seul type de câbles. De plus, des boîtiers de raccord ou des prises peuvent être installés dans les zones élargies formant chambres.

De façon avantageuse, chaque logement de forme tubulaire présente une pluralité de zones élargies formant chambres réparties sur sa longueur. Un élément détectable est disposé dans l'épaisseur du plancher surélevé au-dessus de chacune des zones élargies formant chambres. De préférence, l'élément détectable est un élément métallique ferro-magnétique. Chaque élément détectable est entouré par une zone de moindre résistance.

Grâce à cette conception, les emplacements du sol dans lesquels peuvent être percées des ouvertures sont facilement détectables par des appareils de détection de type magnétique par exemple le plancher surélevé comportant des zones de moindre résistance au voisinage des éléments magnétiques détectables, les trous ou ouvertures de passage de câble sont faciles à réaliser.

Le plancher surélevé peut comporter dans son épaisseur deux réseaux de logements de forme tubulaire, les logements de forme tubulaire d'un réseau entrecoupant les logements de forme tubulaire de l'autre réseau, les zones élargies formant chambre d'un réseau étant communes aux zones élargies formant chambres de l'autre réseau.

De préférence, les logements de forme tubulaire sont ouverts du côté de la face inférieure dudit plancher surélevé, et des cavités ouvertes du côté de la face inférieure dudit plancher surélevé sont ménagées dans l'épaisseur du plancher surélevé.

Selon une variante de l'invention, le plancher surélevé est constitué par une juxtaposition de moules élémentaires de coffrage recouverte par une couche de béton et délimitant la face inférieure dudit plancher surélevé, chaque moule élémentaire comportant une plaque profilée rigide ayant une épaisseur sensiblement homogène et mise en forme de manière à ménager à partir de sa face inférieure au moins une rainure destinée à former une portion d'un logement de forme tubulaire.

Les éléments métalliques détectables sont alors placés de préférence dans lesdites plaques profilées au voisinage de la partie supérieure de la rainure. Dans cette variante, chaque moule élémentaire comporte au moins un élément métallique détectable et la plaque profilée comporte une zone de moindre résistance entourant ledit élément métallique détectable.

Selon une autre variante de l'invention, le plancher surélevé est constitué par une juxtaposition de dalles monoblocs reposant sur le plancher structurel de l'immeuble.

Le fait que les logements débouchent du côté de la face inférieure du faux plancher permet de diminuer au maximum l'épaisseur du faux plancher. Un point de raccordement peut desservir plusieurs logements tubulaires, ce qui se traduit par une diminution du nombre de fourreaux ou de câbles transitant dans les zones de circulation de l'immeuble.

Le but de la présente invention est également de proposer une dalle préfabriquée d'un plancher surélevé qui permette de réaliser un faux plancher ou plancher surélevé de faible hauteur n'ayant pas les inconvénients résultant des vérins de support de dalle de la technique actuelle.

Le but est atteint selon l'invention par le fait que la dalle proposée, ayant une face supérieure plane, une face inférieure parallèle à la face supérieure et plusieurs faces latérales, est caractérisée en ce qu'elle comporte au moins une rainure ménagée à partir de la face inférieure de la dalle et débouchant sur deux faces latérales, ladite rainure étant susceptible de servir de passage à au moins un câble électrique, téléphonique ou autres.

Grâce à cette conception, la présence de vérins n'est plus nécessaire, la dalle reposant directement sur le plancher structurel de l'immeuble. Ceci se traduit par une stabilité parfaite du plancher surélevé.

De façon préférentielle, la dalle comporte un voile rigide formant la face supérieure de ladite dalle, des parois de support dudit voile et des cloisons délimitant chacune desdites rainures, lesdites parois de support et lesdites cloisons étant situées du même côté par rapport audit voile et étant fixées audit voile.

Elle est munie d'alésages, chaque alésage traversant ledit voile et l'une desdites parois de support ou desdites cloisons.

Le voile est renforcé par des nervures situées sous la face inférieure dudit voile et à l'extérieur desdites rainures.

La dalle comprend avantageusement plusieurs rainures qui se croisent sensiblement perpendiculairement et peut comprendre au moins une rainure courbe débouchant perpendiculairement sur deux faces latérales adjacentes de ladite dalle.

Une zone de moindre résistance est formée dans ladite dalle au-dessus de chacune desdites rainures.

De plus, la dalle comprend un élément métallique détectable dans chacune desdites zones de moindre résistance.

D'autres avantages et caractéristiques de l'invention apparaîtront à la lecture de plusieurs modes de réalisation de l'invention faits à titre d'exemple et illustrés par les dessins annexés dans lesquels :

- la figure 1 représente un schéma non exhaustif de desserte du local par le sol ;

- la figure 2 est une coupe du plancher surélevé selon la ligne II-II de la figure 1 ;

- la figure 3 est un détail de la figure 2 ;

- la figure 4 représente une chambre munie d'une ouverture ;

- la figure 5 représente une coupe d'un mode de réalisation du plancher surélevé selon l'invention ;

- la figure 6 est une vue en perspective d'un premier mode de réalisation d'un moule élémentaire de coffrage pour la mise en oeuvre du procédé ;

- la figure 7 est une vue en perspective d'un deuxième mode de réalisation d'un moule élémentaire ;

- la figure 8 est une vue de dessous en perspective d'un troisième mode de réalisation d'un moule élémentaire ;

- la figure 9 est une vue de dessus en perspective du troisième mode de réalisation ;

- la figure 10 est une coupe verticale d'une dalle selon la ligne X-X de la figure 11 ;

- la figure 11 est une coupe vue de dessous de la même dalle selon la ligne XI-XI de la figure 10 ;

- la figure 12 est une coupe d'une vis de réglage d'une dalle ; et

- la figure 13 est une vue en plan d'une fixation de coin.

Dans un immeuble, les câbles électriques, téléphoniques, optiques, de transmission de données ou autres aboutissent souvent dans les étages de l'immeuble à des répartiteurs 1 ou des sous-répartiteurs installés en général dans des zones de l'étage accessibles aux services d'entretien et de sécurité telles que les cages d'escalier ou les zones de circulation 2.

A partir de ces répartiteurs 1, les locaux 3 sont desservis par des câbles passant par, ou aboutissent à, des points de raccordement 4 prévus au voisinage du plancher du local 3, soit dans les zones de circulation 2, soit dans les plinthes 5 du local 3. Le point de raccordement peut également être situé directement dans le local du répartiteur.

Les câbles reliant les répartiteurs 1 aux points de raccordement 4 du local 3 à équiper sont installés, soit dans des fourreaux 6 noyés dans une chape rapportée des zones de circulation 2, soit dans des caniveaux 7 prévus le long des bords des zones de circulation 2, soit sur des chemins de câble situés en dessous du plancher structurel 10 de l'étage, ou passent le long des façades 8 de l'immeuble.

Selon la présente invention, le plancher structurel 10 du local est recouvert par un plancher surélevé 11 ayant une épaisseur au plus égale à 10 cm. Le plancher surélevé 11 comprend des logements de forme tubulaire 12 qui s'étendent parallèlement à la surface du sol et qui sont ménagés dans l'épaisseur du plancher surélevé 11.

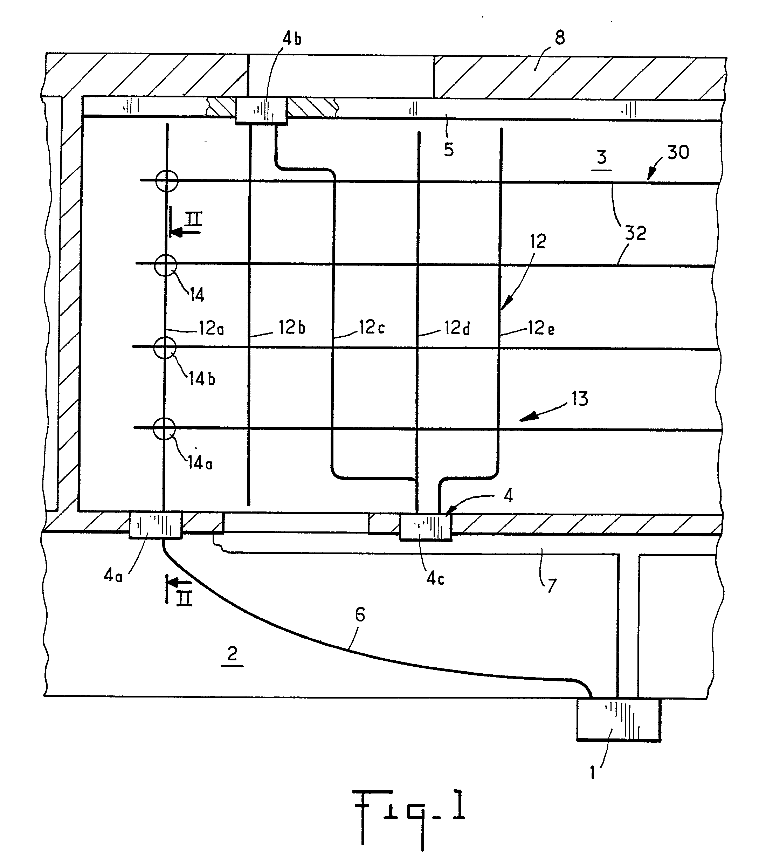

La figure 1 montre schématiquement un réseau 13 de logements de forme tubulaire 12 ou galeries sensiblement parallèles disposés perpendiculairement à la zone de circulation 2 et à la façade 8 de l'immeuble. La galerie 12a communique avec le point de raccordement 4a, les galeries 12b et 12c avec le point de raccordement 4b et les galeries 12c, 12d et 12e avec le point de raccordement 4c.

La trame du réseau 13 est de préférence adaptée à la trame de l'immeuble.

La distance entre deux galeries 12a et 12b sera égale par exemple à 90 cm, cette valeur étant un sous-multiple de 270 cm qui correspond à une trame courante d'immeuble.

Chaque logement 12 traverse une pluralité de chambres 14a, 14b ménagées dans l'épaisseur du plancher surélevé 11.

Chaque chambre 14 a une face supérieure 15 située au voisinage de la face supérieure 16 du plancher surélevé 11. Dans la paroi 17 comprise entre les faces 15 et 16 est prévu un élément métallique 18 détectable par un appareil de détection de métal de type habituel, et destiné à trouver facilement la position de la chambre 14. L'élément métallique 18 est de préférence en fer. Autour de l'élément métallique 18 et dans la paroi 17 est prévue une zone de moindre résistance circulaire 19 située au-dessus de la chambre 14. La zone de moindre résistance 19 peut facilement être brisée ou découpée par un marteau, un burin ou une scie de manière à ménager une ouverture 20 dans la paroi 17 au-dessus de la chambre 14. La chambre 14 a une taille suffisante pour pouvoir passer facilement un câble par l'ouverture 20 et le pousser jusqu'au point de raccordement 4. Le câble peut naturellement être introduit par le point de raccordement 4, glisser dans la galerie 12 et être tiré par son extrémité avant à travers l'ouverture 20.

L'ouverture 20 et la chambre 14 ont des dimensions suffisantes pour pouvoir installer des prises dans la chambre 14. L'ouverture 20 peut également être obturée par un cache permettant le pas-

sage des câbles. De préférence, la paroi de fond 21 de la chambre 14 se trouve dans le même plan que la partie inférieure 22 de la galerie 12 et la portion de paroi 23 délimitant la galerie 12 au voisinage de la chambre 14 rejoint la paroi latérale 24 de la chambre 14 selon des formes arrondies de manière à éviter l'accrochage de l'extrémité du câble lors de la mise en place du câble dans la galerie 12.

Un deuxième réseau 30 de galeries 32 disposées perpendiculairement aux galeries 12 du premier réseau 13 peut naturellement être ménagé dans le plancher surélevé 11. Le deuxième réseau 30 peut être disposé dans un plan différent du réseau 13 de telle manière que les galeries 32 du réseau 30 ne traversent pas les galeries 12 du réseau 13, mais de préférence les galeries 32 du deuxième réseau 30 traversent ou croisent les galeries 12 au niveau des chambres 14, de telle manière que chaque chambre 14 soit traversée par deux galeries 12 et 32 sensiblement perpendiculaires.

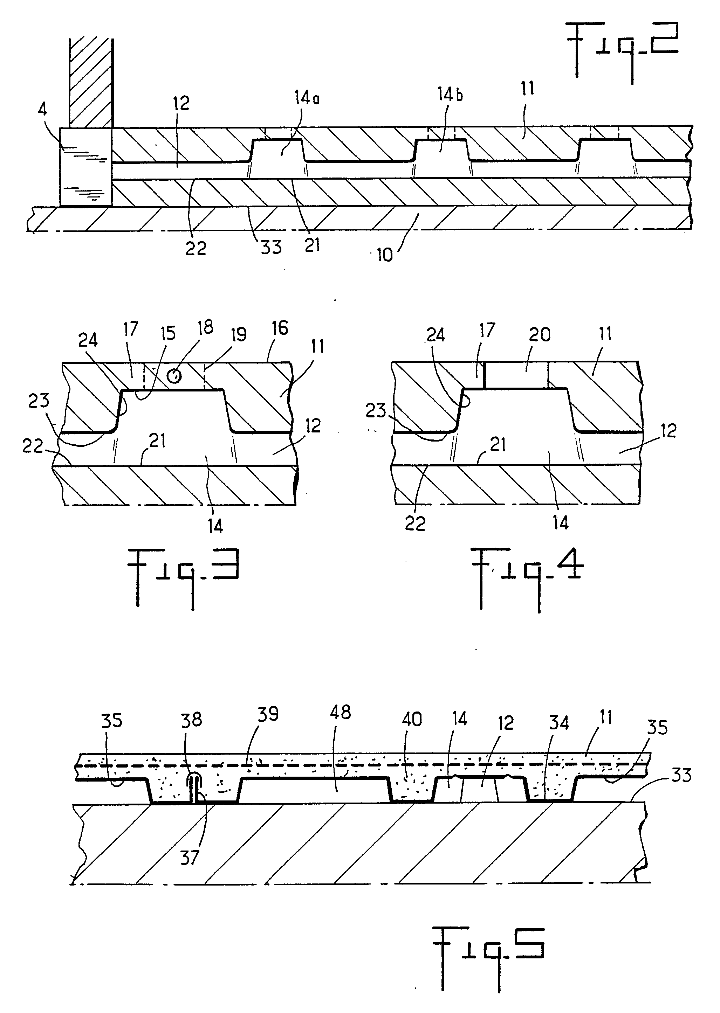

Sur la figure 2, on voit que la galerie 12 peut être située à l'intérieur du plancher surélevé 11, la paroi de fond 21 de la chambre 14 et la partie inférieure 22 de la galerie 12 se trouvant au-dessus de la face supérieure 33 du plancher structurel 10.

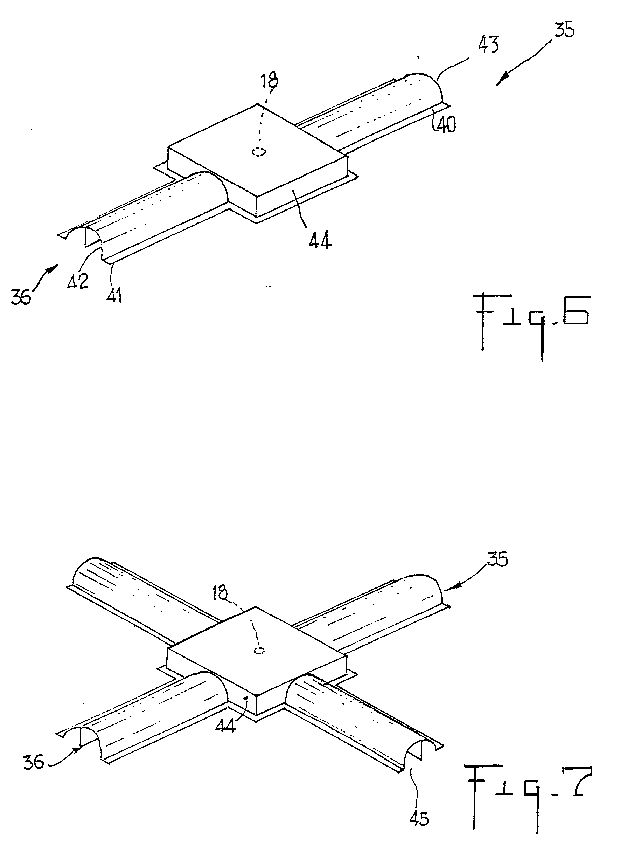

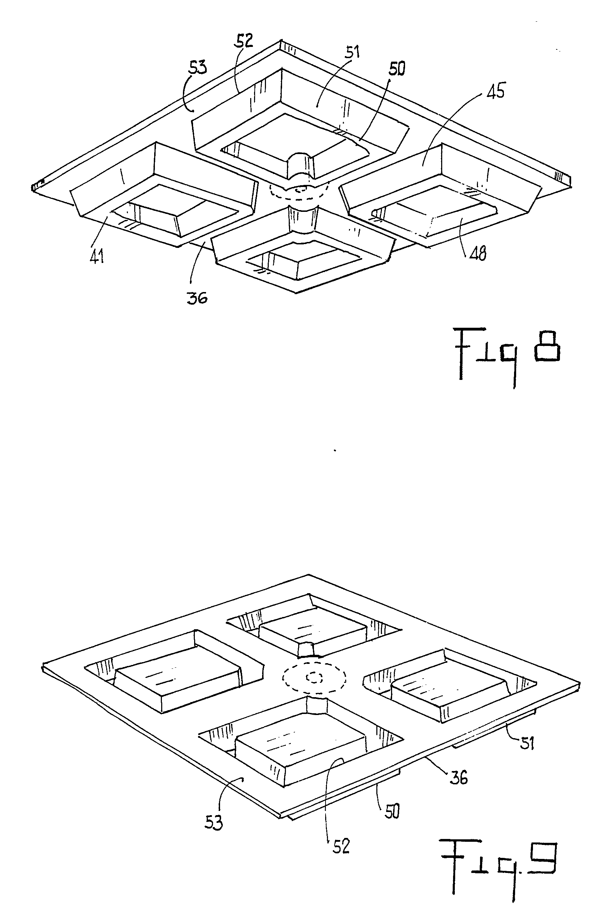

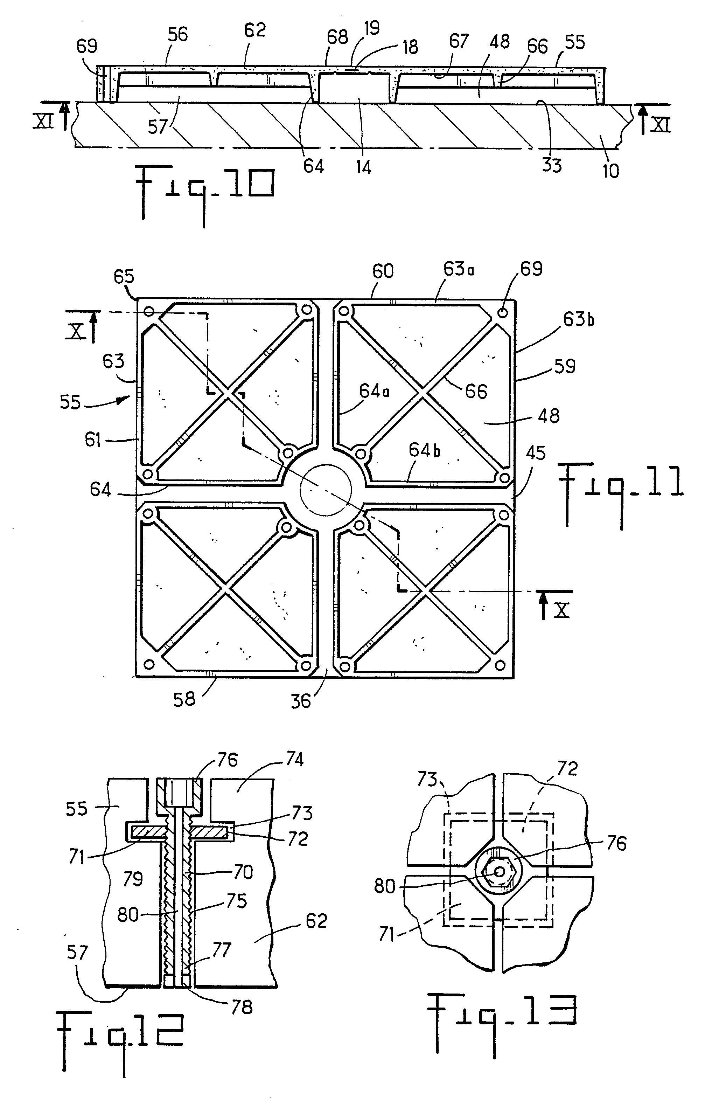

La figure 5 représente un mode de réalisation du plancher surélevé 11 dans lequel les logements de forme tubulaire 12 et les chambres 14 débouchent du côté de le face inférieure 34 du plancher surélevé 11 qui est au contact de la face supérieure 33 du plancher structurel 10. Le plancher surélevé 11 est réalisé sur place dans le local 2 de la manière que l'on va décrire.

Des moules élémentaires de coffrage 35 décrits plus loin dans le présent mémoire et délimitant au moins une rainure 36 sont juxtaposés sur le plancher structurel 10 de telle manière que plusieurs rainures 36 soient alignées de façon à constituer un logement de forme tubulaire 12 reliant un point de raccordement. Les bords 37 juxtaposés de deux moules élémentaires 35 sont reliés par une bande d'étanchéité adhésive 38 ou par tout autre moyen, tel qu'un système à emboîtement ou à recouvrement, de manière à assurer l'étanchéité à l'eau et au béton de l'ensemble. On peut disposer un grillage à armature galvanisée 39 au-dessus des moules élémentaires 35 juxtaposés, mais ce n'est pas obligatoire, avant de couler du béton 40. Le béton utilisé est un microbéton contenant du ciment et de fins granulés de sable dans lequel est incorporé un plastifiant réducteur d'eau de manière à éviter des fissures dans la chape. On obtient ainsi une chape rapportée sur le plancher structurel 10 du local 2 comportant des logements de forme tubulaire 12 dont la disposition est fonction de la forme du moule élémentaire 35 choisi.

Comme le montre le figure 6, le moule élémentaire 35, selon le premier mode de réalisation, est constitué par une plaque profilée rigide 40 ayant une épaisseur sensiblement homogène. La plaque 40 est mise en forme de manière à ménager, à partir de se face inférieure 41, une rainure 36 débouchant sur deux faces latérales 42 et 43 de la plaque 40. La rainure 35 possède une zone 44 de plus grande section délimitant une chambre 14.

La figure 7 représente un deuxième mode de réalisation d'un moule élémentaire 35 ayant deux rainures 36 et 45 qui se croisent perpendiculairement au voisinage de leur intersection, les deux rainures 36 et 45 s'élargissant de manière à constituer une chambre 14.

La portion de paroi supérieure de la zone 44 formant chambre peut être surélevée par rapport au reste de la plaque 40. Cette portion de paroi supérieure peut comporter une zone circulaire de moindre résistance 19 qui peut comprendre en son centre un élément métallique détectable 18.

Les figures 8 et 9 montrent une variante du moule élémentaire 35 comprenant deux rainures 36 et 45 se croisant perpendiculairement, dans laquelle la plaque 40 est mise en forme de manière à ménager, à partir de sa face inférieure 41, des cavités 48 ne communiquant pas avec les rainures 36 et 45 et destinées à alléger le plancher surélevé 11. Les bords d'extrémité 50 de la plaque 40 sont prolongés par des parois latérales 51 s'étendant vers le haut. Les extrémités supérieures 52 des parois latérales 51 sont situées dans un plan sensiblement parallèle au plan de la face inférieure 41 de la plaque 40 et situé au-dessus de la plaque 40. Un rebord horizontal 53 s'étend à partir des extrémités supérieures 52. Le rebord 53 sert de support à la bande d'étanchéité adhésive 38 et au grillage à armature métealisée 39.

Le dessin montre un moule élémentaire 35 ayant une seule rainure rectiligne 36 ou 45 s'étendant dans un sens de l'élément unitaire. On peut naturellement concevoir un moule élémentaire 35 ayant plusieurs rainures 36 parallèles ou des rainures de forme courbe qui se rejoignent et que l'on emploie dans la fabrication de la chape au voisinage des points de raccordement de manière à faire communiquer plusieurs logements de forme tubulaire 12c, 12d et 12e par exemple au même point de raccordement 4b.

Le moule élémentaire 35 est formé en une seule pièce par moulage d'un matériau plastique. Le moule élémentaire 35 peut avantageusement être réalisé avec des déchets de bois, sciure ou copeaux, comprimés, ou en microbéton renforcé avec des fibres minérales, verre, amiante ou roches. Il peut également être réalisé en une plaque métallique emboutie. Ses dimensions sont fonction de la trame de l'immeuble et en général le moule élémentaire 35 a la forme d'une croix ayant 90 cm de côté environ, les rainures 36 et 45 ont une hauteur de 3 cm et une largeur de 8 cm environ. Ces dimensions peuvent être évidemment différentes de celles mentionnées sans sortir du cadre de l'invention.

La zone de moindre résistance 19 peut être conformée de telle manière que, après la création d'une ouverture 20 par rupture ou découpage de la zone de moindre résistance 47, les bords de l'ouverture 20 permettent de fixer facilement un boîtier de raccordement dans l'ouverture 20.

Le plancher surélevé 11 peut également être réalisé par une juxtaposition de dalles préfabriquées 55. Les figures 10 et 11 montrent un mode de réalisation d'une dalle 55 d'un plancher surélevé selon l'invention. La dalle 55 représentée a une face supérieure 56 plane et une face inférieure 57 parallèle à la face supérieure 56 et quatre faces latérales 58, 59, 60 et 61. Deux rainures perpendiculaires 36 et 45 sont ménagées à partir de sa face inférieure 57 et débouchent chacune sur deux faces latérales 58, 60 ; 59, 61 de la dalle 55. Les rainures 36 et 45 ont une section de forme rectangulaire ou semi-circulaire présentant une hauteur de 3 cm environ et une largeur de 5 cm environ. La dalle 55 comporte un voile rigide 62 formant la face supérieure 56 de la dalle 55, des parois de support 63 du voile 62 et des cloisons 64 délimitant les rainures 36 et 45. Les parois de support 63 et les cloisons 64 sont situées du même côté du voile 62. Chaque support de paroi 63 s'étend perpendiculairement au voile 62 entre un coin 65 de la dalle 55 et une première cloison 64.

Les rainures 36 et 45 se croisent dans une chambre 14 située au centre de la dalle 55, et partagent la dalle en quatre parties carrées comprenant chacune deux parois de support 63a et 63b et deux cloisons 64a et 64b. Une cavité 48 est délimitée par les parois 63a, 63b, les cloisons 64a, 64b et le voile 62. Des nervures de renforcement 66 sont situées sous la face inférieure 67 du voile 62 à l'intérieur de la cavité 48.

Les cloisons 64a et 64b sont reliées par une portion de paroi courbe de telle manière que la chambre 14 ait une section supérieure à la section des rainures 36 et 45. La portion 68 du voile 62 située au-dessus de la chambre 14 comporte une zone circulaire de moindre résistance 19 et un élément métallique détectable 18 situé au centre de la dalle 55.

Des alésages 69 verticaux traversant chacun le voile 62 et une paroi de support 63 ou une cloison 64 peuvent être prévus dès la construction au voisinage des points de liaison des cloisons 64 et des parois de support 63 délimitant les cavités 48, ou percés à la demande lors de la réalisation d'un plancher surélevé 11 avec les dalles 55.

Le voile 62 a une épaisseur faible et voisine de 1,5 cm, les parois de support 63 et les cloisons 64 ont également une épaisseur voisine de 2 cm. La dimension de chaque côté de la dalle est de 90 cm environ et son épaisseur est de 5 cm environ.

La dalle est fabriquée par moulage avec du béton renforcé par des fibres minérales, verre, amiante ou roches, et son poids est de 30 kg environ.

Il va de soi qu'on peut créer une dalle 55 ayant des dimensions différentes de celles données ci-dessus sans sortir du cadre de la présente invention. La dalle 55 peut en particulier avoir plusieurs rainures 36 parallèles avec des dispositions différentes, et les parois de support peuvent être légèrement disposées en retrait par rapport à la face latérale adjacente de la dalle 55 de manière à ménager sur chacune de ses faces une demi-rainure.

La dalle 55 est fixée au sol de façon traditionnelle par un ciment colle. En cas de mauvaise qualité de l'appui de la dalle, un complément de ciment colle ou de résine peut être introduit par les alésages 69. Après la pose des dalles et la vérification de la qualité de l'appui des dalles, les alésages 69 sont obturés par une injection de résine ou de ciment colle.

Les figures 12 et 13 montrent un mode de réalisation particulier d'un réglage de l'installation du plancher surélevé 11 à l'aide d'une vis de réglage 70 coopérant avec une plaque de fixation 71 de forme généralement carrée dont chaque coin 72 est logé dans une cavité 73 s'étendant à l'horizontale et ménagée dans chaque coin 74 du voile 62 d'une dalle 55. La vis de réglage 70 est constituée d'une tige filetée creuse 75 se terminant par une tête 76 à six pans également creuse. A l'extrémité inférieure 77 de la tige creuse 75 sont ménagés des orifices latéraux 78. La vis de réglage 70 a une hauteur voisine de l'épaisseur de la dalle 55. Lors de l'installation du plancher surélevé 11, la plaque de fixation 71 est correctement positionnée au coin de quatre dalles 55. Le plaque de fixation 71 maintient les quatre dalles 55 adjacentes au même niveau. La tige creuse 75 est vissée dans un alésage 79 de la plaque de fixation 71 jusqu'à ce que son extrémité inférieure 77 touche le plancher structurel 10. On conçoit facilement que tournant davantage la vis de réglage 70 la plaque de fixation 71 est rehaussée entraînant avec elle les coins 74 des quatre dalles adjacentes. Après réglage du niveau du plancher surélevé 11, de la colle est introduite par l'alésage 80 de la tige filetée creuse, la colle sort par les orifices latéraux 78 et se répand entre la face inférieure 57 de la dalle 55 et la face supérieure 33 du plancher structurel 10.

Un mode de réalisation préféré de l'invention consiste à réaliser le plancher surélevé 14 à l'aide de moules élémentaires de coffrage 35 du type de ceux représentés sur les figures 6 et 7 sur lesquels on coule du béton. De préférence, les rainures 36 en forme de gouttière renversée présentent une section moindre près de leurs extrémités libres. Ces moules élémentaires de coffrage 35, présentant des zones 44 formant les chambres 14, peuvent être combinés avec des moules de coffrage en forme de gouttière renversée qui ne présentent pas de zone 44 de plus grande section et qui ont une section homogène sur toute leur longueur, cette section étant prévue pour que cette gouttière renversée puisse recouvrir de façon pratiquement étanche les extrémités des rainures 36 associées aux chambres 14. De cette manière, deux chambres voisines 14 sont reliées par une portion de galerie 12 en forme de voute constituée par trois rainures 36. La distance séparant deux chambres voisines 14 peut être ajustée par découpe des gouttières renversées de section homogène avec une scie appropriée. On peut également juxtaposer deux moules élémentaires 35 comportant des chambres 14 en accolant les extrémités de deux rainures 36 et en recouvrant ces extrémités par une portion de gouttière renversée formant l'étanchéité.

## Revendications

1. Plancher surélevé recouvrant un plancher structurel (10), et servant à la desserte d'un local (3) d'immeuble avec des câbles électriques, téléphoniques, optiques ou autres, issus du sol et reliés à des points de raccordement (4) prévus au voisinage du plancher structurel (10) du local (3) dans les zones de circulation (2) de l'immeuble ou dans les plinthes (5) du local (3), ledit plancher surélevé (11) comportant dans son épaisseur un espace creux dans lequel des câbles peuvent être installés, caractérisé en ce que l'espace creux est organisé en au moins un réseau (13) de logements de forme tubulaire (12) indépendants les uns des autres, chaque logement de forme tubulaire (12) communiquant avec un point de raccordement (4), et présentant une pluralité de zones élargies formant chambres (14) réparties sur sa longueur.

2. Plancher surélevé selon la revendication 1, caractérisé en ce qu'un élément détectable (18) est disposé dans son épaisseur au-dessus de chacune des zones élargies formant chambres (14).

3. Plancher surélevé selon la revendication 2, caractérisé en ce que l'élément détectable (18) est un élément métallique ferro-magnétique.

4. Plancher surélevé selon l'une quelconque des revendications 2 et 3, caractérisé en ce que chaque élément détectable (18) est entouré par une zone de moindre résistance (19).

5. Plancher surélevé selon l'une quelconque des revendications 1 à 4, caractérisé en ce que l'espace creux est organisé en deux réseaux (13, 30) de logements de forme tubulaire (12, 32), les logements de forme tubulaire (12) d'un réseau (13) entrecoupant les logements de forme tubulaire (32) de l'autre réseau, et les zones élargies formant chambres (14) d'un réseau (13) étant confondues avec les zones élargies formant chambres (14) de l'autre réseau (32).

6. Plancher surélevé selon l'une des revendications précédentes, caractérisé en ce qu'il comporte de plus des cavités (48) ménagées dans son épaisseur et ouvertes du côté de la face inférieure (34) dudit plancher surélevé.

7. Plancher surélevé selon l'une des revendications précédentes, caractérisé en ce que les logements de forme tubulaire (12) sont ouverts du côté de la face inférieure (34) dudit plancher surélevé (11).

8. Plancher surélevé (11) selon la revendication 7, caractérisé en ce qu'il est réalisé par une juxtaposition de moules élémentaires de coffrage (35) recouverte par une couche de béton et délimitant la face inférieure (34) dudit plancher surélevé (11), chaque moule élémentaire (35) étant constitué par une plaque profilée (40) rigide ayant une épaisseur sensiblement homogène et mise en forme de manière à ménager à partir de sa face inférieure (41) au moins une rainure (36) destinée à former une portion d'un logement de forme tubulaire (12).

9. Plancher surélevé (11) selon la revendication 8, caractérisé en ce que ladite rainure (36) présente une zone (44) de plus grande section délimitant une chambre (14) et en ce qu'il est prévu au moins un élément détectable (18) dans la portion de paroi supérieure de ladite zone (44).

10. Plancher surélevé (11) selon la revendication 9, caractérisé en ce que la plaque profilée (40) comporte une zone de moindre résistance (47) entourant ledit élément détectable (18).

11. Plancher surélevé (11) selon la revendication 7, caractérisé en ce qu'il est constitué par une juxtaposition de dalles monoblocs (55) reposant sur le plancher structurel (10) de l'immeuble.

12. Dalle d'un plancher surélevé selon la revendication 11, ayant une face supérieure plane (56), une face inférieure (57) parallèle à la face supérieure (56) et plusieurs faces latérales (58, 59, 60, 61), caractérisée en ce qu'elle comporte au moins une rainure (36) ménagée à partir de la face inférieure (57) de ladite dalle (55) et débouchant sur deux faces latérales (58, 60) de ladite dalle (55), ladite rainure (36) étant susceptible de servir de passage à au moins un câble électrique, téléphonique, optique ou autres.

13. Dalle selon la revendication 12, caractérisée en ce qu'elle comporte un voile rigide (62)

formant la face supérieure (56) de ladite dalle (55), des parois de support (63) dudit voile (62) et des cloisons (64) délimitant chacune desdites rainures (36), lesdites parois de support (63) et lesdites cloisons (64) étant situées du même côté par rapport audit voile (62) et étant fixées audit voile (62).

14. Dalle selon la revendication 13, caractérisée en ce qu'elle est munie d'alésages (69), chaque alésage traversant ledit voile (62) et l'une desdites parois de support (63) ou desdites cloisons (64).

15. Dalle selon l'une des revendications 13 ou 14, caractérisée en ce que ledit voile (62) est renforcé par des nervures (66) situées sous la face inférieure dudit voile (62) et à l'extérieur desdites rainures (36).

16. Dalle selon l'une des revendications 12 à 15, caractérisée en ce qu'elle comprend plusieurs rainures (36, 45) qui se croisent sensiblement perpendiculairement.

17. Dalle selon l'une des revendications 12 à 16, caractérisée en ce qu'elle comprend au moins une rainure courbe débouchant perpendiculairement sur deux faces latérales (58, 59) adjacentes de ladite dalle (55).

18. Dalle selon l'une des revendications 12 à 17, caractérisée en ce qu'au moins une zone de moindre résistance (19) est formée dans ladite dalle (55) au-dessus de chacune desdites rainures (36).

19. Dalle selon l'une des revendications 12 à 18, caractérisée en ce que ladite dalle (55) est formée en une seule pièce.

20. Dalle selon l'une des revendications 12 à 19, caractérisée en que ladite dalle (55) est en béton renforcé avec des fibres minérales.

21. Dalle selon l'une des revendications 18 à 20, caractérisée en qu'elle comprend en outre un élément métallique (18) détectable dans chacune desdites zones de moindre résistance (19).

Fig-1

Fig. 2

Fig. 3

Fig. 4

Fig. 5

Fig.6

Fig.7

Fig 8

Fig 9

Fig.10

Fig.11

Fig.12

Fig.13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-1 758 989 (WALKER)<br>* Page 2, ligne 75 - page 3, ligne 95; figures 1-7 *<br>--- | 1,5 | E 04 F 15/024<br>E 04 B 5/48<br>H 02 G 3/28<br>H 02 G 3/02 |
| A | US-A-2 680 775 (WIESMANN)<br>* Colonne 2, ligne 22 - colonne 4, ligne 72; figures 1-3 *<br>--- | 1,6 | |
| A | DE-B-1 231 330 (DEUTSCHE TELEPHONWERKE UND KABELINDUSTRIE)<br>* Colonne 3, ligne 4 - colonne 4, ligne 35; figures 1-4 *<br>--- | 1,2,3,9 | |
| A | US-A-3 943 673 (LINDAHL et al.)<br>* Colonne 1, ligne 57 - colonne 3, ligne 8; figures 1-3 *<br>--- | 1,2,4, 10,18, 21 | |
| A | US-A-3 426 492 (FORK)<br>* Colonne 3, ligne 41 - colonne 5, ligne 23; figures 1-11 *<br><br>--- | 1,2,3,4 ,8,9,10 ,18,19, 21 | |
| A | US-A-3 549 781 (JONES)<br>* Colonne 1, ligne 46 - colonne 4, ligne 7; figures 1-9 *<br><br>--- | 1,7,8, 10,11, 12,16, 17,19, 20 | DOMAINES TECHNIQUES RECHERCHES (Int. Cl.5)<br><br>E 04 F<br>E 04 B<br>H 02 G |
| A | GB-A- 400 924 (ROBERTSON CO.)<br>* Page 2, ligne 56 - page 3, ligne 97; figures 1-5 *<br>----- | 1 | |

**Le présent rapport a été établi pour toutes les revendications**

| Lieu de la recherche | Date d'achèvement de la recherche | Examinateur |
|---|---|---|
| LA HAYE | 07-06-1990 | AYITER J. |